# EUROPÄISCHE PATENTANMELDUNG

(11) **EP 2 662 780 A1**
(43) Veröffentlichungstag der Anmeldung: **13.11.2013**
(21) Anmeldenummer: 12167792.6
(22) Anmeldetag: 11.05.2012
(51) Int. Cl.: G06F 17/27, G06Q 10/06, G06F 9/44

(54) **Verfahren zur programmgestützten Erzeugung einer korrekten und kompletten technischen Spezifikation**

(71) Anmelder: Orange Moon Produktions GmbH & Ko KG, 14806 Belzig (DE)
(72) Erfinder: Jokisch, Eckard, 14806 Belzig (DE)
(74) Vertreter: Farago, Peter Andreas

(57) **Zusammenfassung**

Die vorliegende Erfindung betrifft ein Verfahren zur Erzeugung einer korrekten und kompletten technischen Spezifikation (3) für ein Gerät ausgehend von einer ersten Spezifikation (1) für das Gerät, die folgenden Schritte umfassend:
- Eingabe der ersten Spezifikation (1) bzw. der Vielzahl an Sätzen über das Mittel zur Eingabe,
- Bestimmen eines möglicherweise vorhandenen logischen Fehlers im Vergleich mit allen korrekten Sätzen einer zweiten Spezifikation (2);
Korrektur des jeweiligen Satzes der ersten Spezifikation, der mit dem logischen Fehler behaftet ist;
Übernehmen des jeweiligen möglicherweise korrigierten Satzes der ersten Spezifikation (1) in die zweite Spezifikation (2) mit korrekten Sätzen;
- Bereitstellen einer Spezifikations-Datenbank (8) mit mindestens einer Gruppe von allgemeinen Spezifikationssätzen;
- Bestimmen von Merkmalen des jeweiligen korrekten Satzes;

Bestimmen mindestens eines zugehörigen allgemeinen Spezifikationssatzes aus der Gruppe der allgemeinen Spezifikationssätze, wobei der mindestens eine zugehörige allgemeine Spezifikationssatz in mindestens einem Merkmal mit dem jeweiligen korrekten Satz übereinstimmt;

Hinzufügen des mindestens einen zugehörigen allgemeinen Spezifikationssatzes zu der zweiten Spezifikation (2), wobei schließlich am Ende der rekursiven Verarbeitungsfolge die korrekte und komplette technische Spezifikation (3) erhalten wird;

## Beschreibung

### Erfindungsgebiet

Die vorliegende Erfindung betrifft ein Programm bzw ein Verfahren zur Erzeugung einer korrekten und kompletten technischen Spezifikation für ein Gerät, ausgehend von einer ersten Spezifikation, die aus einer Vielzahl an Sätzen besteht. Dabei wird zunächst eine logische Fehlererkennung und -behebung durchgeführt und die technische Spezifikation anschließend aus einer Gruppe von allgemeinen Spezifikationssätzen bei einer jeweiligen logischen Übereinstimmung ergänzt.

### Hintergrund der Erfindung

Bekannt und viel im Einsatz sind programmgestützte SW-Tools (Software-Tool) für eine Eingabe der technischen Spezifikationen, wie beispielsweise Microsoft-WORD oder Microsoft-Excel, mit denen eine Vielzahl an Sätzen, die jeweils einen Teil des Gerätes spezifizieren, strukturiert und kapitelweise aufgenommen und wiedergegeben werden können. Dabei werden bei der Erstellung der technischen Spezifikation entsprechende Teile davon jeweils kapitelweise eingegeben oder eingefügt bzw ergänzt, bis die technische Spezifikation schließlich vollständig ist bzw die letzte Version erreicht hat. Dabei werden üblicherweise auch Verweise auf andere Spezifikationen oder Normen eingefügt, deren Merkmale und Kenngrößen somit nicht unmittelbar in der technischen Spezifikation mit enthalten sind, sondern separat durch die entsprechende Spezifikation oder Norm aufgesucht werden müssen. Die oben genannten SW-Tools sind weit verbreitet im Einsatz, auch schon deshalb, da sie universell auch für andere Zwecke eingesetzt werden und deshalb weit verbreitet sind. Vorteilhaft dabei sind ein schon gewohnter Umgang mit dem SW-Tool, geringe Kosten, da das SW-Tool meist schon vorhanden ist, die Kompatibilität der SW-Tools von eingebenden Personen und von auslesenden Personen. Nachteilig ist dabei, dass die Spezifikation nicht zwangsläufig eindeutige Sätze aufweisen muss und dahingegen die Sätze oft lange und verschachtelt eingegeben werden können. Auch können sich einzelne Sätze hinsichtlich eines Merkmals widersprechen, ohne dass dies automatisch erkannt und darauf hingewiesen werden kann. Der Nachteil, dass andere Spezifikationen separat aufgesucht und berücksichtigt werden müssen, ist schon oben angedeutet Da die technische Spezifikation nicht zwangsläufig eine eindeutige und kurze Merkmalsbeschreibung enthält, sondern oft lange und umschweifende Sätze gestattet, ist sie in einer solchen freien Form nicht geeignet, einer Produktionsmaschine zur automatischen Erzeugung des Geräts zugeführt zu werden, um das Gerät dadurch zu erzeugen.

Bekannt und im Einsatz sind auch programmgestützte SW-Tools für die technische Spezifikation, mit der zugleich für jeden Satz der technischen Spezifikation halbautomatisch ein oder mehrere Testschritte generiert und zugeordnet werden können. Beispielsweise offenbart DE2006050112A1 ein solches programmgestütztes SW-Tool, mit dem die technische Spezifikation für ein embedded System und damit für eine Software satzweise anhand von durch das SW-Tool vorgeschlagenen Textbausteinen zusammengestellt werden kann, wobei der Nutzer die jeweils passenden Textbausteine auswählt. Dadurch werden eine eindeutige Struktur und eine zulässige Syntax gewährleistet. Darüber hinaus wird die technische Spezifikation in ein Test-Metamodell überführt Dies hat jedoch den Nachteil, dass der Nutzer bei der Eingabe eines neuen Satzes ständig die dabei vorgeschlagenen Textbausteine auswählen muss und eine Eingabe dadurch mühsam ist. Eine Ausweitung des darin beschriebenen Verfahrens beispielsweise für mechanische Geräte würde die Auswahl der Textbausteine noch weiter komplizieren und schließlich unmöglich machen. Eine automatische Korrektur von sich logisch widersprechenden Sätzen oder Merkmalen ist nicht gegeben.

### Zusammenfassung der Erfindung

Daher besteht eine Aufgabe der Erfindung, um die Nachteile aus dem Stand der Technik zu beseitigen, in der Bereitstellung eines PC-gestützten Verfahrens zur Erzeugung einer technischen Spezifikation für ein Gerät, wobei merkmalsbehaftete Sätze der technischen Spezifikation eingegeben werden können, und so weiterverarbeitet werden, dass zwangsläufig eine logisch widerspruchsfreie technische Spezifikation entsteht. Darüber hinaus sollen automatisiert zusätzliche, zugehörige Merkmale mit in die technische Spezifikation aufgenommen werden, die für eine Produktion des Geräts aus technischen Gründen auch notwendig sind, berücksichtigt zu werden.

Die vorstehenden Aufgaben sowie weitere der Beschreibung zu entnehmende Aufgaben werden von einer Vorrichtung und einem Verfahren gemäß den Merkmalen des unabhängigen Anspruchs 1 gelöst. Weitere vorteilhafte Ausführungsformen der Erfindung sind in den abhängigen Ansprüchen angegeben.

Vorteilhaft an dem Verfahren der vorliegenden Erfindung ist die Erzeugung einer zwangsläufig sowohl korrekten als auch kompletten technischen Spezifikation für ein Gerät Vor allem auch im Hinblick auf eine zukünftig immer weiter automatisierte Fertigung von technischen Geräten ist eine in sich schlüssige und logisch fehlerfreie und komplette technische Spezifikation unabdingbar, da ansonsten kein einwandfrei technisches Gerät gefertigt würde. Das erfindungsgemäße Verfahren zwingt einerseits zu einer Eingabe von kurzen Sätzen, die dann auch logisch überprüfbar sind und überprüft werden. Auf diese Weise kann nach möglichen Korrekturen von logischen Fehlern mit erhöhter Sicherheit ausgeschlossen werden, dass sich ggf noch ein logischer Fehler in der technischen Spezifikation befindet.

Von besonderem Vorteil ist auch die bevorzugt automatische Verknüpfung mit vorhandenen allgemeinen Spezifikationssätzen, die entweder aus einer einzuhaltenden Norm stammen oder aus Erfahrungswerten, die mit der Zeit bei der Entwicklung und Fertigung von technischen Produkten entstehen und "übernommen" bzw.. "zugeordnet" werden können. Die derzeit noch üblichen generellen Verweise und Unterverweise auf Normen und Unternormen werden durch konkrete Zuordnung bestimmter allgemeiner Spezifikationssätze zu den jeweiligen Sätzen einer ersten Spezifikation abgelöst. Dadurch wird die technische Spezifikation vollständig und zeigt die jeweiligen allgemeinen Spezifikationssätze an den Stellen auf, zu denen sie auch tatsächlich gehören. Abschnitte der technischen Spezifikation tragen damit alle notwendigen Informationen in sich und können somit auch losgelöst voneinander beispielsweise an Maschinen zu einer Teileproduktion (Leiterplatten, CNC-Fräse, Stereolithographie etc) weitergeleitet werden.

Eine bevorzugte Ausführungsform gemäß der vorliegenden Erfindung ist in nachfolgenden Zeichnungen und in einer detaillierten Beschreibung dargestellt, soll aber die vorliegende Erfindung nicht darauf begrenzen.

### Kurzbeschreibung der Zeichnungen

- Fig. 1: zeigt ein Datenflussdiagramm einer Datenverarbeitung von einer Eingabe einer ersten Spezifikation für ein Gerät über die Erzeugung einer zweiten Spezifikation mit korrekten Sätzen bis hin zu einer Ausgabe bzw. Abspeicherung einer korrekten und kompletten technischen Spezifikation für das Gerät
- Fig. 2: zeigt ein Datenflussdiagramm einer erweiterten Datenverarbeitung von der Eingabe der ersten Spezifikation für das Gerät über die Erzeugung der zweiten Spezifikation bis hin zu der Ausgabe bzw Abspeicherung der korrekten und kompletten technischen Spezifikation für das Gerät
- Fig. 3: zeigt einen Ausschnitt der Datenverarbeitung, bei der allgemeine Spezifikationssätze einer Spezifikations-Datenbank zu jeweiligen korrekten Sätzen der zweiten Spezifikation zugeordnet bzw hinzugefügt werden, so dass sich daraus die korrekte und komplette technische Spezifikation für das Gerät ergibt.
- Fig. 4: zeigt eine Gruppe der allgemeinen Spezifikationssätze (oben), einen Ausschnitt der zweiten Spezifikation (Mitte) und einen Ausschnitt der korrekten und kompletten technischen Spezifikation für das Gerät

### Detaillierte Beschreibung eines Ausführungsbeispiels

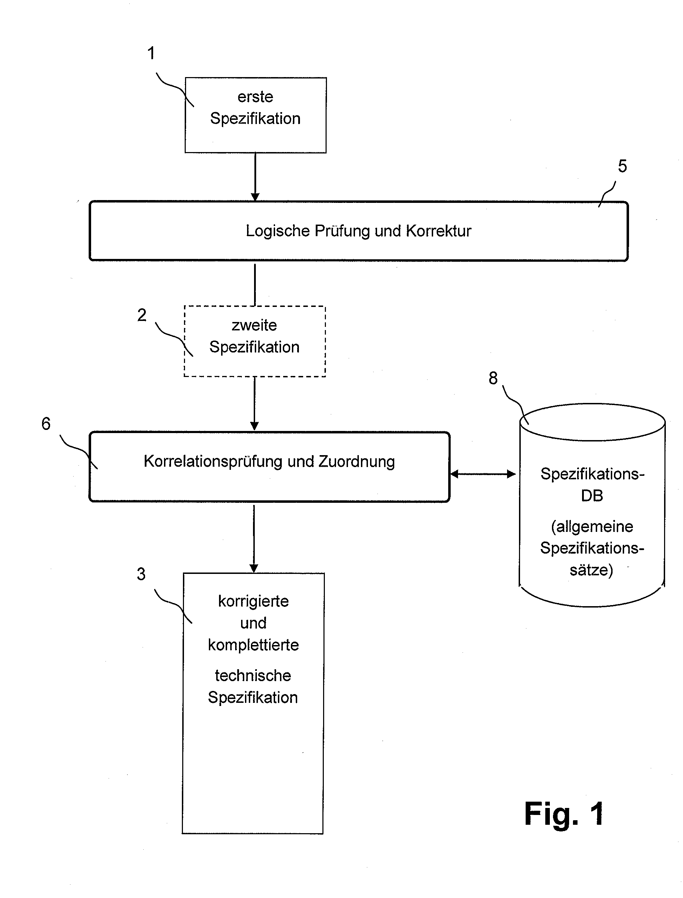

Fig. 1 zeigt ein Datenflussdiagramm gemäß des erfindungsgemäßen Verfahrens zur Datenverarbeitung einer ersten technischen Spezifikation 1, die ein technisches Gerät spezifiziert, zu einer korrekten und kompletten technischen Spezifikation 3, die das technische Gerät korrekt, ohne Widersprüche und komplettiert in seinen Merkmalen spezifiziert. Dabei läuft das Verfahren bzw. die Datenverarbeitung und die nachfolgend beschriebene, erweiterte Datenverarbeitung Programm- bzw. PC-gestützt ab. Dabei steht der Begriff PC für jede Art von Datenverarbeitungsgerät und insbesondere für einen PersonalComputer bzw. für einen PC/Laptop und dergleichen. Dabei weist der PC vorzugsweise Mittel für eine Eingabe bzw. für ein Einlesen der ersten Spezifikation 1, für eine Abspeicherung von Daten und für eine Anzeige und für eine Ausgabe der korrekten und komplettierten technischen Spezifikation 3 auf

Der besseren Lesbarkeit wegen werden die folgenden Begriffe vereinfacht eingesetzt:
- die erste technische Spezifikation 1 ist gleichbedeutend mit erste Spezifikation 1 und mit Daten der ersten Spezifikation 1,
- eine zweite technische Spezifikation 2 ist gleichbedeutend mit zweite korrekte Spezifikation 2, mit zweite Spezifikation 2 und mit Daten der zweiten Spezifikation 2;
- die korrekte und komplette technische Spezifikation 3 ist gleichbedeutend mit technische Spezifikation 3 und mit Daten der technischen Spezifikation 3;
- ein Satz ist gleichbedeutend mit ein Spezifikationssatz; und
- das Datenverarbeitungsverfahren ist gleichbedeutend mit Programm.

Das erfindungsgemäße Verfahren zur Datenverarbeitung der Daten der ersten Spezifikation 1 umfasst die in Fig. 1 dargestellten Datenverarbeitungsschritte, wie folgt.

Zunächst wird dazu festgestellt, dass die erste Spezifikation 1 eine Vielzahl an Sätzen umfasst, die jeweils Teile der spezifizierenden Merkmale mit möglichen Bedingungen für das Gerät enthalten. Die Sätze sind bevorzugt kurze prägnante Sätze, die bevorzugt aus einem Subjekt, einem Objekt, einem Verb, einem Modalverb, mindestens einer Messgröße und mindestens einer Bedingung oder Teilen davon bestehen. Die Sätze sind bevorzugt eindeutige Sätze, die beispielsweise keinen Konjunktiv enthalten.

Die Eingabe der ersten Spezifikation 1, die aus einer Vielzahl an Sätzen besteht, wird bevorzugt per Tastatur oder per Datenträger vorgenommen. Dabei werden die Daten in einem Datenspeicher abgelegt.

### Logische Prüfung und Korrektur 5:

Die Daten der ersten Spezifikation 1 werden dann rekursiv Satz für Satz, angefangen mit einem ersten bis zu einem letzten Satz, durch eine logische Fehleranalyse mit einer Korrektur verarbeitet und bevorzugt in die zweite Spezifikation 2 übernommen. Bei der logischen Fehleranalyse werden zunächst die das Gerät spezifizierenden Merkmale bzw. Merkmalskombinationen des jeweiligen aktuellen Satzes bestimmt und dann mit den Merkmalen bzw. Merkmalskombinationen aller anderen korrekten Sätze der zweiten Spezifikation 2 auf einen Widerspruch hin verglichen. Tritt ein Widerspruch zwischen dem aktuellen Satz und einem der korrekten Sätze der zweiten Spezifikation 2 auf, so liegt ein logischer Fehler vor, der zu korrigieren ist. Ein solcher logischer Fehler wird dann entweder im aktuellen Satz oder in dem jeweiligen korrekten Satz, der im Widerspruch zu dem aktuellen Satz steht, korrigiert Die Korrektur wird bevorzugt automatisiert vorgenommen. Alternativ wird die Korrektur als mindestens ein Korrekturvorschlag am Bildschirm und durch entsprechende Auswahl durch den Nutzer vorgenommen. Am Ende der Fehleranalyse mit möglicherweise der Korrektur wird der aktuelle Satz in die zweite Spezifikation (2) als der jeweilige korrekte Satz übernommen

Alternativ zur der satzweisen Übernahme des aktuellen Satzes von der ersten Spezifikation 1 als korrekter Satz in die zweite Spezifikation 2 kann der korrekte Satz auch in der ersten Spezifikation 1 verbleiben, wobei dann der nächste, noch nicht verarbeitete Satz verarbeitet wird; am Ende der Verarbeitung aller Sätze wird dann die erste Spezifikation 1 als bzw wie die zweite Spezifikation 2 für nachfolgende Prozesse weiterverwendet.

Bevorzugt werden für die Bestimmung des logischen Fehlers im jeweiligen Satz außer dessen Merkmalen auch abgeleitete Merkmale und abgeleitete Merkmalskombinationen bestimmt, mit denen die gleichen Fehleranalysen wie mit den Merkmalen und den Merkmalskombinationen durchgeführt werden Die abgeleiteten Merkmale werden dabei bevorzugt über physikalische Formeln bestimmt. Weitere abgeleitete Merkmale werden bevorzugt über Wort-Tabellen bestimmt, wie beispielsweise, dass das Merkmal "Verstärker" mit dem abgeleiteten Merkmal "Elektronik" übereinstimmt.

### Bereitstellen einer Spezifikations-Datenbank 8:

Es wird eine Spezifikations-Datenbank 8 mit mindestens einer Gruppe von allgemeinen Spezifikationssätzen, die Spezifikationssätze aus einer Norm, aus einer unternehmensinternen Norm oder aus anderen Spezifikationen sein können, bereit gestellt. Das Programm ermöglicht es, auf die darin enthaltenen Spezifikationssätze zuzugreifen und jeweilige Spezifikationssätze den korrekten Sätzen der zweiten Spezifikation 2 zuzuordnen. Bevorzugt sind die allgemeinen Spezifikationssätze als korrekte Sätze abgespeichert, so dass sie nicht möglicherweise nochmals korrigiert zu werden brauchen. Bevorzugt kann für die nachfolgende datenverarbeitende Verwendung die entsprechende Gruppe der allgemeinen Spezifikationssätze vom Nutzer ausgewählt werden. Die Auswahl kann dabei beispielsweise gerätespezifisch oder kundenspezifisch oder nach beiden Kriterien erfolgen.

### Rekursives Ausführen einer Zuordnung 6 von allgemeinen Spezifikationssätzen:

Ziel ist es für den folgenden Programmschritt, aus einer Gruppe von allgemeinen Spezifikationssätzen diejenigen Spezifikationssätze zu finden und der zweiten Spezifikation 2 zuzuordnen bzw. hinzuzufügen, die zu einem jeweiligen korrekten Satz logisch dazu gehören.

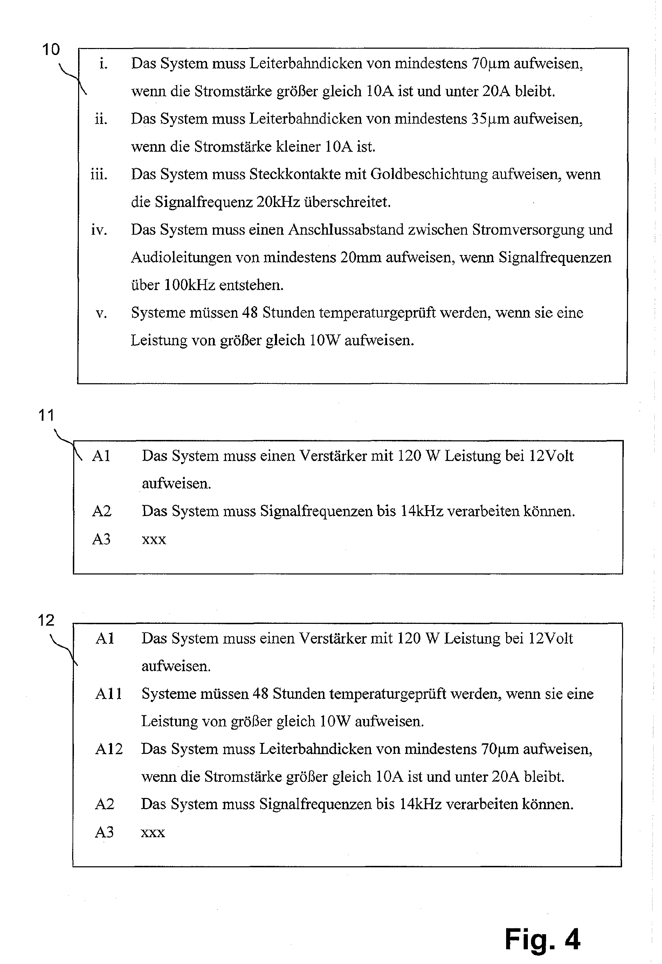

Ein Beispiel ist dazu in Fig. 4 dargestellt: Abschnitt 10 zeigt dazu die Gruppe der allgemeinen Spezifikationssätze; Abschnitt 11 zeigt dazu zwei korrekte Sätze der zweiten Spezifikation 2. Abschnitt 11-A1 zeigt den Satz "Das System muss einen Verstärker mit 120W Leistung bei 12 Volt aufweisen".

Im Vergleich der Merkmale mit den allgemeinen Spezifikationssätzen folgt, dass die Bedingung des allgemeinen Spezifikationssatzes 10-v erfüllt ist, dass nämlich die Leistung größer gleich 10W beträgt, so dass logischerweise der allgemeine Spezifikationssatz 10-v zum korrekten Satz 11-A1 hinzuzufügen ist, wenn die Gruppe der allgemeinen Spezifikationssätze des Abschnitts 10 als gültig ausgewählt worden ist.

Abschnitt 12 zeigt das Ergebnis der erweiterten korrekten Sätze mit dem eingefügten Satz 12-A11, der dem allgemeinen Spezifikationssatz 10-v entspricht.

Dem korrekten Satz 11-A1 können aber abgesehen von den angegebenen Merkmalen bevorzugt auch abgeleitete Merkmale entnommen werden, indem beispielsweise von der Spannung 12V in Verbindung mit der Leistung 120W auch ein Strom von 10A abgeleitet werden kann. Bei der Prüfung auf Übereinstimmung des abgeleiteten Merkmals 10A mit den Merkmalen der allgemeinen Spezifikationssätze aus Abschnitt 10, wird erkannt, dass auch die Bedingung des allgemeinen Spezifikationssatzes 10-i erfüllt ist und der allgemeine Spezifikationssatz 10-i entsprechend dem korrekten Satz 11-A1 zugeordnet werden muss, was als Ergebnis in Abschnitt 12-A12 zu erkennen ist.

Um die mögliche Zuordnung des jeweiligen allgemeinen Spezifikationssatzes aus der jeweiligen Gruppe zu dem jeweiligen korrekten Satz aufzufinden, werden dementsprechend folgende Schritte korrekter Satz nach korrektem Satz rekursiv ausgeführt:
Zunächst werden dazu die Merkmale des jeweiligen korrekten Satzes bestimmt und für eine anschließende Suche abgespeichert Bevorzugt werden von den Merkmalen auch abgeleitete Merkmale bestimmt, die ebenso zu den Merkmalen für die anschließende Suche zählen. Die abgeleiteten Merkmale werden bevorzugt über physikalische Formeln bestimmt. Weitere abgeleitete Merkmale werden bevorzugt über Wort-Tabellen bestimmt, wie beispielsweise dass das Merkmal "Verstärker" mit dem abgeleiteten Merkmal "Elektronik" übereinstimmt

In der Gruppe der allgemeinen Spezifikationssätze wird dann nach den Merkmalen des jeweiligen korrekten Satzes gesucht, und bei Auffinden eines der Merkmale wird der entsprechende allgemeine Spezifikationssatz markiert bzw dazu bestimmt, zu einer Zuordnung bzw. Übernahme in die zweite Spezifikation 2 zur Auswahl zu stehen. Die Auswahl wird dann bevorzugt automatisch vorgenommen. Alternativ wird die endgültige Bestimmung für die Zuordnung bzw Übernahme durch den Nutzer vorgenommen, indem die zur Auswahl der entsprechenden allgemeinen Spezifikationssätze an einem Bildschirm dargestellt werden und ausgewählt werden können.

Bevorzugt wird dem Nutzer auch eine Auswahlmöglichkeit für eine manuelle Zuordnung bzw für ein Hinzufügen des mindestens einen allgemeinen Spezifikationssatzes zu dem jeweiligen korrekten Satz der zweiten Spezifikation 2 bereitgestellt

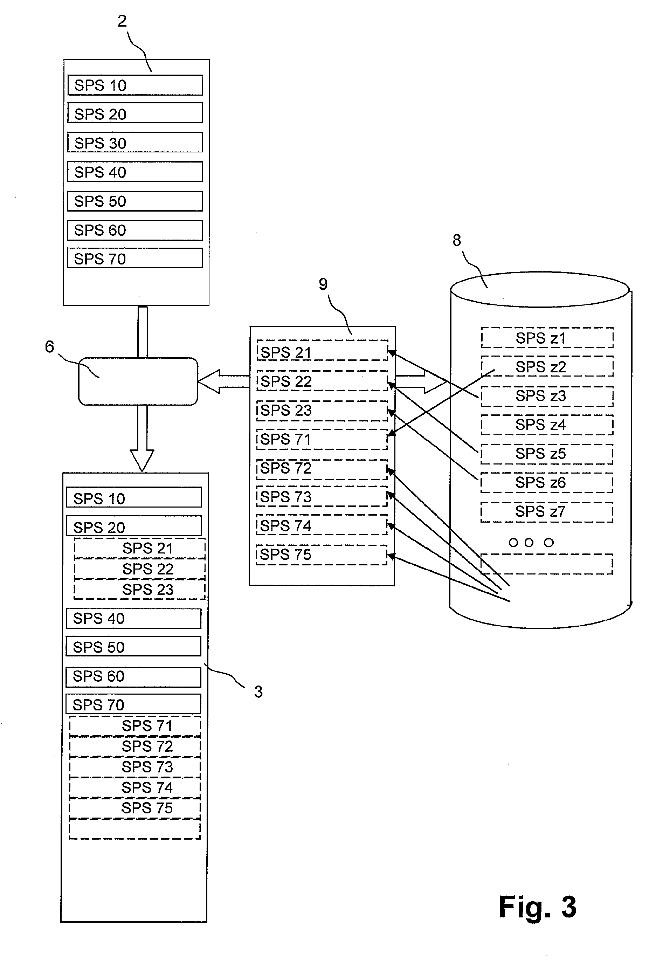

Fig. 3 zeigt ein Beispiel zur Erklärung des oben beschriebenen Prozesses der rekursiven Ausführung der Zuordnung 6 der allgemeinen Spezifikationssätze zu einem korrekten Satz der zweiten Spezifikation 2. Darin sind die korrekten Sätze der zweiten Spezifikation 2 mit SPS10 - SPS70 und die allgemeinen Spezifikationssätze der Spezifikations-Datenbank 8 mit SPSz1 - SPAz7 bezeichnet

Die oben beschriebene Merkmalsvergleichsanalyse ergibt, dass die Merkmale des korrekten Satzes SPS10 nicht in der Spezifikations-Datenbank 8 aufgefunden werden, wonach der korrekte Satz SPS10 dann ohne weitere Zuordnungen in die technische Spezifikation 3 übergeht

Die oben beschriebene Merkmalsvergleichsanalyse ergibt weiterhin, dass jeweils mindestens ein Merkmal des korrekten Satzes SPS20 mit den Merkmalen der allgemeinen Spezifikationssätze SPSz3, SPSz5 und SPSz6 der Spezifikations-Datenbank 8 übereinstimmen, worauf die allgemeinen Spezifikationssätze SPSz3, SPSz5 und SPSz6 dem korrekten Satz SPS20 zugeordnet werden und so auch in die technische Spezifikation 3 übergehen.

### Abspeichern der korrekten und kompletten technischen Spezifikation 3:

Auf die oben beschriebene Weise wird rekursiv und sukzessive die zweite korrekte Spezifikation 2 in die korrekte und komplette technische Spezifikation 3 überführt und als solche abgespeichert.

Bevorzugt wird die korrekte und komplette technische Spezifikation (3) in der Spezifikations-Datenbank 8 abgespeichert, so dass sie auch für eine Erzeugung einer nachfolgenden anderen technischen Spezifikation 3 als die Gruppe der allgemeinen Spezifikationssätze ausgewählt bzw. verwendet werden kann.

### Weitere Ausführungsformen:

### Syntaxprüfung und -korrektur 4 der Sätze der ersten Spezifikation 1:

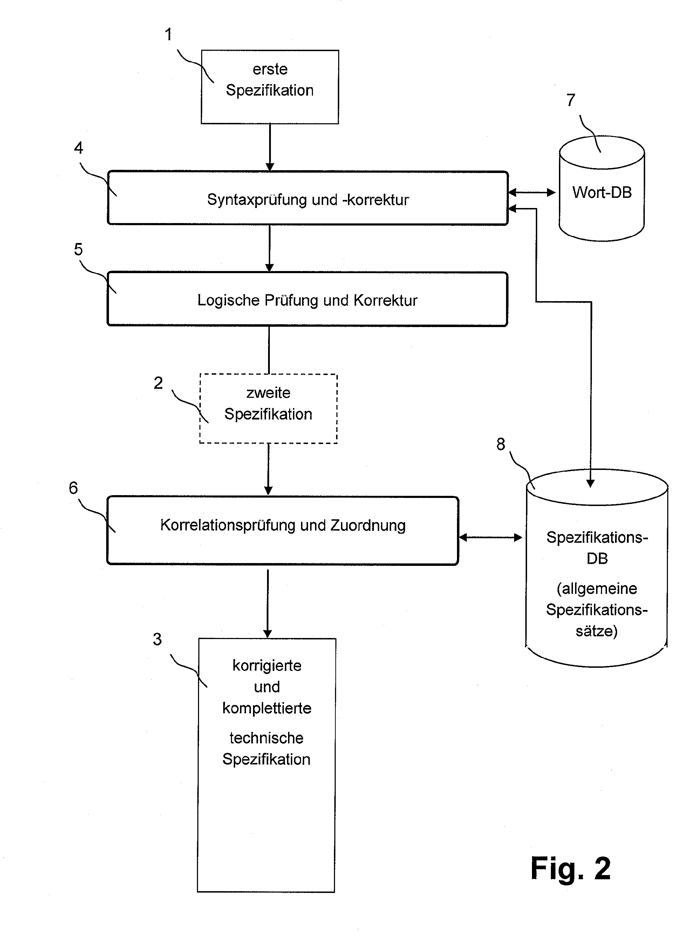

Fig. 2 zeigt ein bevorzugtes erweitertes Ausführungsbeispiel der Datenverarbeitung zur Erzeugung der technischen Spezifikation 3, wobei zusätzlich eine Syntaxprüfung und möglicherweise eine Korrektur 4 der Sätze der ersten Spezifikation 1 durchgeführt werden.

Dabei wird ein jeweils eingegebener Satz der ersten Spezifikation 1 auf möglicherweise vorhandene syntaktische Fehler hin überprüft und bevorzugt korrigiert. Der jeweilige Satz wird dabei bevorzugt in Textelemente aufgeteilt, die durch einen Syntaxdetektionsalgorithmus auf bestimmte Regeln hin untersucht werden. Eine solche Regel ist beispielsweise, dass dann ein syntaktischer Fehler detektiert wird, wenn eine aus dem jeweiligen Satz bestimmte Satzkomposition aus den bestimmten Textelementen nicht einer von definierten Satzkompositionen mit Textelementen entspricht.

Eine solche definierte Satzkomposition ist beispielsweise, dass sie ein Subjekt, ein Modalverb, ein Verb und ein Objekt enthält. Eine weitere definierte Satzkomposition ist beispielsweise, dass sie das Subjekt, das Modalverb, das Verb, das Objekt und mindestens eine Messgröße enthält. Eine weitere definierte Satzkomposition ist beispielsweise, dass sie das Subjekt, das Modalverb, das Verb, das Objekt, mindestens eine Messgröße und mindestens eine Bedingung enthält.

Nach Detektion eines solchen syntaktischen Fehlers wird das mindestens eine Textelement, das den syntaktischen Fehler verursacht oder der gesamte fehlerhafte Satz, auf dem Bildschirm markiert. Das mindestens eine markierte Textelement, das den syntaktischen Fehler verursacht, kann dann ausgetauscht bzw. dadurch korrigiert werden Das Austauschen geschieht bevorzugt durch Anwenden eines automatischen Korrekturalgorithmus, der mit einer Wort-Datenbank 7, die die Textelemente umfasst, in Verbindung steht und der das entsprechende Korrektur-Textelement einsitzt Alternativ kann das Austauschen dadurch geschehen, dass alternative Korrektur-Textelemente am Bildschirm angezeigt werden, von denen eines manuell vom Nutzer ausgewählt werden kann.

Die Wort-Datenbank 7 umfasst eine Vielzahl an Worten bzw. Textelementen, die bevorzugt jeweils ein Attribut aufweisen wie beispielsweise A) "frei verwendbar", dafür dass das jeweilige Wort bzw. Textelement in einem Satz frei verwendet werden darf, B) "eingeschränkt verwendbar", dafür dass das jeweilige Wort bzw. Textelement in einem Satz nur eingeschränkt und unter bestimmten Bedingungen verwendet werden darf, die für den Korrekturalgorithmus bekannt sind, und C) "verboten", dafür dass das jeweilige Wort bzw. Textelement in einem Satz nicht verwendet werden darf. Diese Attribute werden von dem Korrekturalgorithmus bevorzugt berücksichtigt.

Bevorzugt werden durch den Syntaxdetektionsalgorithmus im jeweiligen Satz unnötige Füllworte detektiert und entfernt Als unnötiges Füllwort wird dabei ein Textelement bezeichnet, das keine merkmalstragende Eigenschaften aufweist, bevorzugt kein Artikel ist und somit keine Bedeutung für den technischen Informationsgehalt des Satzes aufweist. Die Detektion der unnötigen Füllworte wird dabei bevorzugt durch Vergleich mit definierten unnötigen Füllworten in der Wort-Datenbank 7 durchgeführt. Alternativ wird ein unnötiges Füllwort bevorzugt dadurch erkannt, dass es nicht Teil der Wort-Datenbank 7 ist, in der nur wesentliche Worte, die also keine Füllworte sind, enthalten sind.

Bevorzugt detektiert der Syntaxdetektionsalgorithmus syntaktische Fehler des jeweiligen Satzes auch, indem der Satz in einer weiteren Datenbank mit abgespeicherten fehlerbehafteten Sätzen aufgefunden wird. Dabei ist der abgespeicherte, fehlerbehaftete Satz mit einem Satz korrekter Syntax verknüpft, wobei der aufgefundene Satz durch den Satz korrekter Syntax ausgetauscht wird. Diese Syntaxanalyse und -korrektur wird bevorzugt rekursiv für alle Sätze der ersten Spezifikation durchgeführt

Eine weitere bevorzugte Ausführungsform des Programms für die PC-gestützte Erzeugung der korrekten und kompletten technischen Spezifikation 3 ermöglicht eine schrittweise Eingabe der ersten Spezifikation 1, wobei A) der mögliche Schritt der Syntaxprüfung und -korrektur 4, B) der Schritt der logischen Prüfung und Korrektur 5, und C) der Schritt des rekursiven Ausführens einer Zuordnung 6 der allgemeinen Spezifikationssätze jeweils bevorzugt zwischen den einzelnen Eingaben und Datenverarbeitungen der einzelnen Sätze der ersten Spezifikation 1 ausgeführt werden.

Bevorzugt werden bei der Eingabe eines neuen Satzes der ersten Spezifikation 1 jeweils Vorschläge für eine Auswahl von Textbausteinen zur Erzeugung des neuen Satzes dargeboten, von denen jeweils ein Textelement auswählbar ist, so dass der Satz dadurch zusammenstellbar ist. Andere Textbausteine, die dabei nicht vorgeschlagen werden, sind vom Nutzer bevorzugt auch eingebbar..

Bevorzugt wird beim Verfahrensschritt des rekursiven Ausführens der Zuordnung 6 der allgemeinen Spezifikationssätze zu einem korrekten Satz auch die folgende Programmausführung durchgeführt. Dabei wird der jeweilige korrekte Satz auf Vorhandensein in einer anderen technischen Spezifikation oder in einer Gruppe von allgemeinen Spezifikationssätzen hin überprüft. Bei dortigem Auffinden bzw. Vorhandensein des jeweiligen korrekten Satzes werden die dort mit dem jeweiligen Satz verknüpften weiteren allgemeinen Spezifikationssätze ebenfalls mit dem jeweiligen korrekten Satz der zweiten Spezifikation 2 verknüpft. Bevorzugt wird diese Verknüpfung automatisch vorgenommen. Alternativ bevorzugt wird diese Verknüpfung durch den Nutzer durch beispielsweise eine Bestätigung bzw. durch eine Auswahl vorgenommen.

Für einen Fachmann versteht es sich, dass die Sätze der ersten Spezifikation 1, die korrekten Sätze der zweiten Spezifikation, die allgemeinen Spezifikationssätze der Spezifikations-Datenbank 8, die korrekten und kompletten Sätze der technischen Spezifikation 3 und andere Sätze nicht jeweils separat in einer Datenbank oder in einem File abgespeichert zu werden brauchen, sondern in einer relationalen Datenbank gehalten werden können Eine separate und kopierte Abspeicherung bzw. Haltung der Daten ist jedoch ebenso möglich.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen

Die in den Ansprüchen genannten Bezugszeichen dienen der besseren Verständlichkeit, beschränken aber die Ansprüche nicht auf die in den Figuren dargestellten Formen.

### Bezugszeichenliste

- 1: erste Spezifikation
- 2: zweite Spezifikation
- 3: korrigierte komplette technische Spezifikation
- 4: Syntaxdetektionsalgorithmus
- 5: Logiküberprüfung und Korrektur
- 6: Korrelationsprüfung und Zuordnung
- 7: Wort-Datenbank
- 8: Spezifikations-Datenbank
- 9: zugehörige Spezifikationssätze

## Patentansprüche

1. Verfahren zur Programm- bzw. PC-gestützten Erzeugung einer korrekten und kompletten technischen Spezifikation (3) für ein Gerät, ausgehend von einer ersten Spezifikation (1) für das Gerät, die folgenden Schritte umfassend:
a) Bereitstellen eines Mittels zur Eingabe der ersten Spezifikation (1), wobei die erste Spezifikation (1) eine Vielzahl an Sätzen umfasst;
b) Eingabe der ersten Spezifikation (1) bzw der Vielzahl an Sätzen über das Mittel zur Eingabe;
c) rekursives Ausführen für jeden Satz der ersten Spezifikation:
- Bestimmen eines möglicherweise vorhandenen logischen Fehlers im Vergleich mit allen korrekten Sätzen einer zweiten Spezifikation (2);
- Korrektur des jeweiligen Satzes der ersten Spezifikation, der mit dem logischen Fehler behaftet ist;
- Übernehmen des jeweiligen korrigierten oder fehlerfreien Satzes der ersten Spezifikation (1) als jeweiligen korrekten Satz in die zweite Spezifikation (2);
d) Bereitstellen einer Spezifikations-Datenbank (8) mit mindestens einer Gruppe von allgemeinen Spezifikationssätzen;
e) rekursives Ausführen für jeden der korrekten Sätze der zweiten Spezifikation (2):
- Bestimmen von Merkmalen des jeweiligen korrekten Satzes;
- Bestimmen mindestens eines zugehörigen allgemeinen Spezifikationssatzes aus der Gruppe der allgemeinen Spezifikationssätze, wobei der mindestens eine zugehörige allgemeine Spezifikationssatz in mindestens einem Merkmal mit dem jeweiligen korrekten Satz übereinstimmt;
- Hinzufügen des mindestens einen zugehörigen allgemeinen Spezifikationssatzes zu der zweiten Spezifikation (2), wobei durch das sukzessive Hinzufügen schließlich am Ende der rekursiven Verarbeitungsfolge aus der zweiten Spezifikation (2) die korrekte und komplette technische Spezifikation (3) erhalten wird;
f) Abspeichern der korrekten und kompletten technischen Spezifikation (3) für das Gerät.

2. Verfahren gemäß Anspruch 1, wobei das Mittel zur Eingabe der ersten Spezifikation mindestens eine Tastatur und einen Bildschirm umfasst und wobei Schritt (b) folgende weitere Schritte umfasst:
- Detektieren von möglicherweise vorhandenen syntaktischen Fehlern in dem jeweiligen eingegebenen Satz der ersten Spezifikation, der aus Textelementen besteht, durch Ausführung eines Syntaxdetektionsalgorithmus;
- Markieren der Textelemente auf dem Bildschirm, die den oder die syntaktischen Fehler verursachen;
- Austauschen der Textelemente, die den syntaktischen Fehler verursachen, wobei das Austauschen entweder durch Anwenden eines automatischen Korrekturalgorithmus, der mit einer Wort-Datenbank (7) in Verbindung steht, geschieht, oder durch ein Anzeigen von jeweiligen alternativen Textelementen und durch manuelles Auswählen eines der alternativen Textelemente durch einen Nutzer..

3. Verfahren gemäß Anspruch 2, wobei der Syntaxdetektionsalgorithmus einen syntaktischen Fehler detektiert, wenn eine Satzkomposition aus den Textelementen von einer vorgegebenen Regel abweicht, wobei die Regel vorsieht, dass die Satzkomposition entweder
a) ein Subjekt, ein Modalverb, ein Verb und ein Objekt enthält; oder
b) das Subjekt, das Modalverb, das Verb, das Objekt und mindestens eine Messgröße; oder
c) das Subjekt, das Modalverb, das Verb, das Objekt, mindestens eine Messgröße und mindestens eine Bedingung enthält.

4. Verfahren gemäß Anspruch 2 oder 3, wobei der Syntaxdetektionsalgorithmus im jeweiligen Satz zudem unnötige Füllworte detektiert und entfernt, wobei die unnötigen Füllworte entweder durch Vergleich mit den unnötigen Füllworten erkannt werden, die in einer Wort-Datenbank (7) enthalten sind, oder dadurch erkannt werden, dass sie in einer Wort-Datenbank (7), die nur wesentliche Worte und damit keine Füllworte enthält, nicht enthalten sind.

5. Verfahren gemäß einem oder mehreren der vorstehenden Ansprüche, wobei die Eingabe der ersten Spezifikation (1) schrittweise erfolgt und dabei die Schritte (c)-(e) jeweils dazwischen ausgeführt werden, so dass
- eine jeweilige schrittweise neue Eingabe von Sätzen der ersten Spezifikation jeweils überprüft, korrigiert und durch den mindestens einen zugeordneten allgemeinen Spezifikationssatz ergänzt wird,
- wobei beim Ausführen von Schritt (c) auch ein möglicherweise vorhandener logischer Fehler im Vergleich mit den korrekten Sätzen der zweiten Spezifikation (2) bestimmt und korrigiert wird.

6. Verfahren gemäß Anspruch 5, wobei in Schritt (b) bei der Eingabe eines neuen Satzes jeweils Vorschläge für eine Auswahl von Textbausteinen zur Erzeugung bzw Eingabe des neuen Satzes dargeboten werden, und wobei andere Eingaben von Textelementen, die sich von den vorgeschlagenen Textbausteinen unterscheiden, vom Nutzer bestätigt werden müssen.

7. Verfahren gemäß einem oder mehreren der vorstehenden Ansprüche, wobei in Schritt (c) die Bestimmung des logischen Fehlers in folgenden Schritten erfolgt:
- Bestimmen von in dem jeweiligen Satz angegebenen Merkmalen und von mindestens einem von den angegebenen Merkmalen abgeleiteten Merkmal, wobei das mindestens eine abgeleitete Merkmal gemäß einer physikalischen Gleichung logisch von den angegebenen Merkmalen im jeweiligen Satz abgeleitet wird, wie beispielsweise, dass aus einem Strom und einer Spannung eine Leistung und/oder ein Widerstandswert abgeleitet werden kann, wobei jeweils die geeignete physikalische Gleichung angewendet wird; und
- Erkennen eines Widerspruchs zwischen einem der angegebenen Merkmalen des jeweiligen Satzes und den angegebenen Merkmalen eines anderen Satzes der ersten Spezifikation (1); oder
- Erkennen zwischen einem der abgeleiteten Merkmale des jeweiligen Satzes und den angegebenen Merkmalen eines anderen Satzes der ersten Spezifikation (1).

8. Verfahren gemäß einem oder mehreren der vorstehenden Ansprüche, wobei in Schritt (c) die Korrektur entweder an dem jeweiligen Satz oder an dem jeweiligen anderen Satz der ersten Spezifikation durchgeführt wird, wobei die Korrektur entweder eine Löschung oder eine andere Abänderung des jeweiligen Satzes der ersten Spezifikation ist.

9. Verfahren gemäß einem oder mehreren der vorstehenden Ansprüche, wobei für die Erzeugung der korrekten und kompletten technischen Spezifikation (3) die Gruppe der allgemeinen Spezifikationssätze aus einer Vielzahl an Gruppen von allgemeinen Spezifikationssätzen ausgewählt werden kann, und/oder
wobei in Schritt (d) die mindestens eine Gruppe der allgemeinen Spezifikationssätze beispielsweise ganz oder teilweise eine allgemeine und/oder eine firmeninterne Norm umfasst.

10. Verfahren gemäß einem oder mehreren der vorstehenden Ansprüche, wobei in Schritt (e) die Merkmale folgende Größen ganz oder teilweise umfassen: ein Subjekt, ein Modalverb, ein Verb, ein Objekt, eine Messgröße und eine Bedingung.

11. Verfahren gemäß einem oder mehreren der vorstehenden Ansprüche, wobei Schritt (e) zudem folgende Schritte umfasst:
- Bestimmen von mindestens einem abgeleiteten Merkmal, das gemäß einer physikalischen Gleichung logisch von den angegebenen Merkmalen im jeweiligen korrekten Satz berechnet bzw abgeleitet wird, wie beispielsweise, dass aus Strom und Spannung eine Leistung und/oder ein Widerstandswert als abgeleitetes Merkmal berechnet werden kann; und
- Hinzufügen des abgeleiteten Merkmals zu den Merkmalen für die nachfolgende Bestimmung des mindestens einen zugeordneten allgemeinen Spezifikationssatzes, der in mindestens einem der Merkmale mit dem jeweiligen korrekten Satz übereinstimmt

12. Verfahren gemäß einem oder mehreren der vorstehenden Ansprüche, wobei Schritt (e) zusätzlich folgende Schritte umfasst:
- Bereitstellen einer Auswahlmöglichkeit für eine Zuordnung mindestens eines beliebigen der allgemeinen Spezifikationssätze zu dem jeweiligen korrekten Satz der zweiten Spezifikation (2); und
- Auswählen und dadurch Hinzufügen des mindestens einen beliebigen allgemeinen Spezifikationssatzes zu der zweiten Spezifikation (2).

13. Verfahren gemäß Anspruch 12, wobei Schritt (e) zusätzlich folgende Schritte umfasst:
- Vergleichen des jeweiligen korrekten Satzes auf Vorhandensein in einer anderen technischen Spezifikation,
- bei Vorhandensein des korrekten Satzes in der anderen technischen Spezifikation, Übertragen bzw. Hinzufügen eines anderen, in dem korrekten Satz der anderen technischen Spezifikation zugeordneten allgemeinen Spezifikationssatzes zu dem jeweiligen korrekten Satz der zweiten Spezifikation (2).

14. Verfahren gemäß einem oder mehreren der vorstehenden Ansprüche, wobei
- in Schritt (c) die Korrektur durch eine vorherige Anzeige mindestens eines Korrekturvorschlags und durch eine Auswahl bzw eine Bestätigung des mindestens einen Korrekturvorschlags durchgeführt wird; und/oder
- wobei in Schritt (e) zunächst der mindestens eine allgemeine Spezifikationssatz zur Auswahl angezeigt wird, der in mindestens einem Merkmal mit dem jeweiligen korrekten Satz übereinstimmt, woraufhin aus der angezeigten Auswahl der mindestens eine zugeordnete allgemeine Spezifikationssatz durch eine Auswahl des Nutzers bestimmt wird.

15. Verfahren gemäß einem oder mehreren der vorstehenden Ansprüche, wobei in Schritt (f) die korrekte und komplette technische Spezifikation (3) zu der Spezifikations-Datenbank (8) mit den allgemeinen Spezifikationssätzen hinzugefügt wird,
und/oder wobei in Schritt (f) eine Speicherung bzw eine Verknüpfung der korrekten und kompletten technischen Spezifikation (3) in einer relationalen Datenbank erfolgt,
und/oder wobei in Schritt (c) beim Übernehmen des jeweiligen korrigierten oder fehlerfreien Satzes der ersten Spezifikation (1) in die zweite Spezifikation der jeweilige korrekte Satz als eine jeweils separate Datei abgespeichert wird.
